# EUROPÄISCHE PATENTANMELDUNG

(11) **EP 0 862 341 A2**
(43) Veröffentlichungstag der Anmeldung: **02.09.1998**
(21) Anmeldenummer: 98200512.6
(22) Anmeldetag: 18.02.1998
(51) Int. Cl.: H04Q 3/62, H04M 15/34

(54) **Telekommunikationssystem mit schleifenfreien Vermittlungstabellen**

(30) Priorität: 28.02.1997 DE 19708112
(71) Anmelder: Philips Patentverwaltung GmbH, 22335 Hamburg (DE); Koninklijke Philips Electronics N.V., 5621 BA Eindhoven (NL)
(72) Erfinder: Schreyer, Oliver, Dipl.-Math., Röntgenstrasse 24, 22335 Hamburg (DE)
(74) Vertreter: Schmalz, Günther, Dipl.-Ing.

(57) **Zusammenfassung**

Die Erfindung betrifft ein Telekommunikationssystem mit mehreren miteinander gekoppelten Vermittlungstellen und wenigstens einer gekoppelten Steuereinheit. Bei Pfadzuteilung in den Vermittlungsstellen anhand von in Vermittlungstabellen gespeicherten Vermittlungsdaten wird zunächst zwischen den gekoppelten Vermittlungsstellen, die jeweils eigene Vermittlungstabellen mit LCR-Daten enthalten, weitervermittelt. Bei einem eingehenden Anruf erkennt die jeweilige Vermittlungsstelle nur den Anfang und das Ende des Pfades, so daß aufgrund einer aktuellen Überlastung oder Unterbrechung des Pfades aus der Vermittlungstabelle der Anruf u.U. permanent zwischen zwei Vermittlungsstellen hin und her geschickt wird, woraus eine Endlosschleife entsteht. Um eine verbesserte Vermittlung unter Berücksichtigung von systemcharakteristischen Parametern zu ermöglichen, ist die Steuereinheit zur Bildung wenigstens eines Verbindungsbaumes, der von einer Vermittlungsstelle ausgehende schleifenfreie Verbindungen zu anderen Vermittlungsstellen des Telekommunikationssystems als Zweige enthält, und zur Umwandlung des Verbindungsbaumes in einen Vermittlungsbaum durch Ermittlung von Paaren von Vermittlungsstellen in den Zweigen und durch Löschung wenigstens eines, das jeweilige Paar in umgekehrter Reihenfolge enthaltenden, Zweiges, vorgesehen. Durch diese Reduktion entstehen aus den Verbindungsbäumen schleifenfreie Vermittlungsbäume, weil eine Endlosschleife zwischen zwei Knoten bei der Vermittlung verhindert wird. Die jeweiligen Zweige entsprechen den möglichen schleifenfreien Verbindungen im Netz. Da für jede Vermittlungsstelle ein Vermittlungsbaum gebildet wird, enstehen so Gruppen von schleifenfreien Verbindungen für das gesamte Telekommunikationssystem.

## Beschreibung

Die Erfindung betrifft ein Telekommunikationssystem mit mehreren miteinander gekoppelten Vermittlungstellen und wenigstens einer gekoppelten Steuereinheit.

Weiterhin betrifft die Erfindung noch eine Steuereinheit für ein Telekommunikationssystem mit mehreren miteinander gekoppelten Vermittlungstellen und eine Vermittlungsstelle für ein Telekommunikationssystem mit mehreren miteinander gekoppelten Vermittlungstellen und wenigstens einer Steuereinheit.

Beispielsweise aus der US 5,452,351 ist eine Vermittlungsstelle mit einer LCR-Funktion bekannt, die innerhalb eines Telekommunikationssystems mit anderen Vermittlungsstellen gekoppelt sein kann. Die LCR("Least-Cost-Routing")-Funktion als Kriterium für die Pfadzuteilung ist ein bekanntes Merkmal, das insbesondere in privaten Telekommunikationssystemen mit mehreren gekoppelten Vermittlungsstellen zur Verfügung gestellt wird. Dabei wird bei einem Verbindungswunsch eines Teilnehmerendgerätes von der zugehörigen Vermittlungsstelle der Pfad zum gewünschten anderen Teilnehmerendgerät zur Verfügung gestellt, der die geringsten Betriebskosten verursacht. Diese bevorzugten Pfade werden vorher anhand von charakteristischen Daten (z.B. Gebühren pro Zeiteinheit, Länge der Zeiteinheit, Zeitpunkt des Verbindungswunsches etc.) berechnet und in geeigneter Form gespeichert. Dabei können auch alternative Pfade mit jeweiligen Prioritäten berechnet werden, die dann gewählt werden, wenn der optimale Pfad gerade nicht benutzt werden kann (z.B. aufgrund Überlastung oder Unterbrechung).

Der in US 5,452,351 offenbarten Vermittlungsstelle sind mehrere Teilnehmerendgeräte zugeordnet. Weiterhin ist der Vermittlungsstelle eine Steuereinheit zugeordnet, die Speichermittel und Verarbeitungsschaltkreise für LCR-Funktionen aufweist.

An die Steuereinheit ist ein Eingabe/Ausgabe-Gerät ("Terminal") angeschlossen, das eine Tastatur zur Eingabe von Daten und eine LCD-Anzeigevorrichtung zur Ausgabe von Daten aufweist. Über das Ein-/Ausgabegerät werden der Steuereinheit LCR-Daten zugeführt, die in den Speichermitteln abgelegt werden. Wenn ein Verbindungswunsch von einem der Teilnehmerendgeräte aus dem privaten Telekommunikationssystem heraus zu einem externen Teilnehmer generiert wird, stellt die Steuereinheit anhand der in ihr gespeicherten LCR-Daten den Pfad zu dem gerufenen anderen Teilnehmerendgerät zur Verfügung, der die geringsten Betriebskosten pro Zeiteinheit verursacht.

In den Speichermitteln sind LCR-Daten in tabellarischer Form gespeichert. Dabei sind unter bestimmten Adressen gespeicherte Codes vorgesehen, die bei der Generierung eines Verbindungswunsches an einen externen Teilnehmer aufgerufen werden und den mit den geringsten Betriebskosten verbundenen Pfad zu dem externen Teilnehmer bestimmen. Dabei sind Anfang und Ende des Pfades durch die Rufnummern des anrufenden internen Teilnehmers und des angerufenen externen Teilnehmers festgelegt.

Bei Pfadzuteilung unter dem LCR-Gesichtspunkt ist es insbesondere vorteilhaft, für einen möglichst großen Teil des Pfades das eigene private Telekommunikations-system zu verwenden. Dadurch wird zunächst zwischen den gekoppelten Vermittlungsstellen, die jeweils eigene Vermittlungstabellen mit LCR-Daten enthalten, weitervermittelt. Bei einem eingehenden Anruf erkennt die jeweilige Vermittlungsstelle nur den Anfang und das Ende des Pfades, woraus mittels der LCR-Daten der günstigste Pfad für die weitere Vermittlung bestimmt wird. Wenn dieser Pfad aufgrund einer aktuellen Überlastung oder Unterbrechung nicht benutzt werden kann, ist in den Vermittlungstabellen ein alternativer Pfad vorgesehen. Da die angesprochene Vermittlungsstelle den bisherigen Verlauf des Anrufs nicht kennt, wird der Anruf u.U. permanent zwischen zwei Vermittlungsstellen hin und her geschickt, woraus eine Endlosschleife entsteht. Für diesen Fall ist ein zusätzliches Merkmal im Netzwerkprotokoll vorgesehen, nach dem rigoros alle Anrufe gelöscht werden, die mehr als eine bestimmte Anzahl von Vermittlungsstellen durchlaufen haben. Die, neben dem Zeitverlust bis zur Löschung, aus dieser Methode resultierenden Nachteile sind offensichtlich.

Natürlich ist neben einer Pfadzuteilung unter Berücksichtigung der geringsten Kosten (LCR) auch eine Erstellung der Vermittlungstabellen zur Vermittlung nach anderen Gesichtspunkten denkbar, wie z.B. nach möglichst optimaler Auslastung der Übertragungskapazität bestimmter Pfade oder Übertragungsgeschwindigkeit.

Aufgabe der Erfindung ist es, ein Telekommunikationssystem mit mehreren miteinander gekoppelten Vermittlungstellen und wenigstens einer gekoppelten Steuereinheit zu schaffen, das eine verbesserte Vermittlung unter Berücksichtigung von systemcharakteristischen Parametern ermöglicht.

Diese Aufgabe wird bei dem erfindungsgemäßen Telekommunikationssystem dadurch gelöst, daß die Steuereinheit zur Bildung wenigstens eines Verbindungsbaumes, der von einer Vermittlungsstelle ausgehende schleifenfreie Verbindungen zu anderen Vermittlungsstellen des Telekommunikationssystems als Zweige enthält, und zur Umwandlung des Verbindungsbaumes in einen Vermittlungsbaum durch Ermittlung von Paaren von Vermittlungsstellen in den Zweigen und durch Löschung wenigstens eines, das jeweilige Paar in umgekehrter Reihenfolge enthaltenden, Zweiges, vorgesehen ist. Das Telekommunikationssystem wird beschrieben durch ein Netz aus Knoten, die die Vermittlungsstellen darstellen, und Linien, die die internen Verbindungen zwischen den Vermittlungsstellen kennzeichnen. Beispielsweise mittels eines Algorithmus werden aus diesem Netz Verbindungsbäume für jeden Knoten erzeugt. Von dem jeweiligen Anfangsknoten ausgehend werden alle möglichen Verbindungen im Netz als Zweige gebildet, wobei jeder Knoten nur einmal je Zweig vorkommt. Durch Ausschluß dieser Wiederholungen werden Verbindungsbäume mit schleifenfreien Zweigen gebildet. Dabei fungiert jede Vermittlungsstelle einmal als Anfangsknoten, so daß genau so viele Verbindungsbäume existieren, wie Vermittlungsstellen im Telekommunikationssystem vorhanden sind. Zur Bildung kann insbesondere ein einfacher rekursiver Algorithmus verwendet werden, der zu jedem Zweig die Nachbarn eines betrachteten Knoten hinzufügt, solange sie noch nicht im bisher vom Anfangsknoten bis zum betrachteten Knoten erzeugten Zweig vorhanden sind. Dieser Algorithmus wird für jeden Knoten als Anfangsknoten einmal angewendet.

Die Verbindungsbäume werden so umgewandelt, daß solche Zweige gelöscht werden, die ein Paar von benachbarten Knoten in umgekehrter Reihenfolge enthalten, das in einem anderen Zweig enthalten ist. Durch diese Reduktion entstehen aus den Verbindungsbäumen schleifenfreie Vermittlungsbäume, weil eine Endlosschleife zwischen zwei Knoten bei der Vermittlung verhindert wird. Wenn in einem Vermittlungsbaum jeder Knoten einmal als Endknoten betrachtet wird, entsprechen die jeweiligen Zweige vom Anfangs- zum betrachteten Endknoten den möglichen schleifenfreien Verbindungen im Netz. Diese Gruppe von schleifenfreien Verbindungen ist der Vermittlungsstelle zugeordnet, die dem Anfangsknoten entspricht. Da für jede Vermittlungsstelle ein Vermittlungsbaum gebildet wird, enstehen so Gruppen von schleifenfreien Verbindungen für das gesamte Telekommunikationssystem.

In einer vorteilhaften Ausführungsform ist vorgesehen, daß die Steuereinheit in der Weise auf dem Verbindungsbaum arbeitet, daß die Zweige des Verbindungsbaumes nacheinander bearbeitet und alle folgenden Zweige, die das gerade bearbeitete Paar in umgekehrter Reihenfolge enthalten, gelöscht werden. Jeweils ausgehend vom Anfangsknoten werden alle Zweige komplett bis zum Endknoten und dann beispielsweise von links nach rechts bearbeitet. Da die Zweige in sich per Vorgabe keinen Knoten mehrfach enthalten, wird das gerade betrachtete Knotenpaar mit Paaren der restlichen Zweige in der angegebenen Reihenfolge verglichen. Wird das betrachtete Paar in einem anderen Zweig mit umgekehrter Reihenfolge der benachbarten Knoten ermittelt, wird vorzugsweise dieser Zweig gelöscht und die Bearbeitung im folgenden Zweig fortgesetzt. Dabei ist es für eine schnelle Bearbeitungszeit günstig, die Verbindungsbäume so zu ordnen, daß zuerst die kürzesten Zweige untersucht werden. Bei Ermittlung eines Paares werden dann lange Zweige gelöscht, die eine entprechend lange Zeit zur Untersuchung benötigt hätten.

Eine andere vorteilhafte Möglichkeit der Bearbeitung des Verbindungsbaumes durch die Steuereinheit ist gegeben, wenn die Zweige in lexikographischer Reihenfolge bearbeitet und alle folgenden Zweige, die das gerade bearbeitete Paar in umgekehrter Reihenfolge enthalten, gelöscht werden. Die Reihenfolge der derart nacheinander betrachteten Paare ist dadurch gegeben, daß die Paare in den Zweigen vom Anfangszum Endknoten stufenweise betrachtet werden. Das heißt, zunächst werden die Paare der ersten Stufe, die gegeben ist durch die geringste Entfernung vom Anfangsknoten, aller Zweige betrachtet und dann die der zweiten Stufe aller Zweige usw.

In einer bevorzugten Ausführungsform ist vorgesehen, daß die Steuereinheit aus Vermittlungsbäumen Tabellen mit Vermittlungsdaten für Vermittlungsstellen bildet und in einem der Steuereinheit zugeordneten Speicher speichert. Die Zweige der erfindungsgemäß reduzierten Vermittlungsbäume entsprechen den von der Vermittlungsstelle, für die der Verbindungsbaum gebildet wurde, ausgehenden möglichen schleifenfreien Verbindungen im Netz. Daraus erzeugt die Steuereinheit Vermittlungsdaten für jede beteiligte Vermittlungsstelle, die in einer Tabelle gespeichert werden, so daß die Steuereinheit bei einem Verbindungswunsch der Vermittlungsstelle darauf zugreifen kann. In der Regel werden mehrere Vermittlungsmöglichkeiten vorgesehen, wobei zunächst immer die optimale (kostengünstigste) ausgewählt und bei Problemen eine alternative Verbindung verwendet wird. Diese Vorabberechnung ermöglicht eine optimale Verarbeitung eines Verbindungswunsches ohne Zeitverlust durch die Steuereinheit. Auch bei Benötigung von alternativen Daten wegen einer besetzten Verbindung entstehen keine Probleme, da die Steuereinheit mehrere Vermittlungsdaten pro Sekunde zur Verfügung stellen kann.

Für eine bevorzugte Ausführungsform der Erfindung ist in den Vermittlungsstellen ein Vermittlungsdatenspeicher und eine Pfadzuteilungseinheit enthalten. Insbesondere bei weit auseinander liegenden Vermittlungstellen im Netz wird der jeweilige Teil der Tabelle mit den Vermittlungsdaten in der zugeordneten Vermittlungsstelle selbst gespeichert. Bei einem Verbindungswunsch eines angeschlossenen Endgerätes oder bei einer Weitervermittlung an ein nicht direkt angeschlossenes Endgerät greift die Pfadzuteilungseinheit auf die Daten zu und stellt damit die günstigste Verbindung zur Verfügung. Dadurch muß nicht mehr auf eine zentrale Steuereinheit zugegriffen werden, was zu einem vereinfachten Aufbau des Netzes führt. Vorteilhaft ist eine Pfadzuteilung unter Berücksichtigung der möglichst geringen Kosten. Dieses Least-Cost-Routing (LCR) Pfadzuteilungsverfahren ist ein bekanntes Leistungsmerkmal in Vermittlungsstellen.

Ein weiterer Vorteil ergibt sich, wenn wenigstens eine Vermittlungsstelle einen PC enthält, der den jeweiligen Vermittlungsdatenspeicher und die Pfadzuteilungseinheit enthält. Eine Realisierung der beiden Funktionen in einem PC schafft eine sehr leichte Bedienbarkeit bei der Wartung der Vermittlungsstelle. Neue Vermittlungsdaten können mittels bekannter Bedienoberflächen am PC auch ohne spezialisierte Fachkräfte installiert werden. Weiterhin ergibt sich damit der Vorteil der wesentlich größeren Speicherkapazität bei einem PC gegenüber einer herkömmlichen Vermittlungsstelle. Da außerdem herkömmliche Elemente verwendet werden können, ergibt sich eine kostengünstige Lösung.

Bei einer vorteilhaften Fortführung dieser Ausführungsform werden die Vermittlungsdaten den zugeordneten Vermittlungsstellen mittels Datenfernübertragung zugeführt. Dabei kann insbesondere das Telekommunikationssystem benutzt werden. Denkbar ist auch die Vermittlungsdaten mittels eines Datenträgers (z.B. eine Diskette) zur Verfügung zu stellen, der an der Vermittlungstelle direkt installiert wird. Dieses Verfahren würde auch eine erhöhte Datensicherheit bieten.

Bei einer anderen vielversprechenden Ausbildung der Erfindung ist vorgesehen, daß eine Vermittlungsstelle jeweils eine Steuereinheit enthält, die die der Vermittlungsstelle zugeordneten Vermittlungsbäume bildet. Dadurch entstehen intelligente Vermittlungsstellen, die die notwendigen Vermittlungsbäume eigenständig bildet. Wenn den Vermittlungsstellen die Daten über die Architektur des Telekommunikationssystems zur Verfügung gestellt werden, kann die Berechnung bis zur Erstellung der Tabelle mit den Vermittlungsdaten lokal erfolgen.
Die Steuereinheit kann vorteilhafterweise ebenfalls als PC ausgebildet sein, was einer kostengünstigen und bedienungsfreundlichen Realisierung entspricht. Die zur Berechnung notwendigen Parameter (z.B. auch genaue Preistabellen) können wie oben beschrieben zugeführt werden.

Eine mögliche Ausführungsform des erfindungsgemäßen Telekommunikations-systems soll im folgenden anhand von Figuren näher erläutert werden. Das Ausführungsbeispiel beschreibt ein Telekommunikationssystem mit Vermitttlungsstellen, die schleifenfreie Verbindungen mittels gespeicherter Vermittlungsdaten zur Verfügung stellen, die den kostengünstigsten Verbindungen entsprechen (LCR). Dabei zeigen
- Figur 1:: eine schematische Darstellung eines Telekommunikationssystems mit 4 Vermittlungsstellen und einer gekoppelten Steuereinheit,
- Figur 2:: ein Blockschaltbild einer Steuereinheit,
- Figur 3:: ein Blockschaltbild einer Vermittlungsstelle,
- Figur 4:: ein Diagramm, das den Ablauf bei der Berechnung von Vermittlungsdaten zeigt, und
- Figur 5:: eine schematische Darstellung einer Ausführungsform eines erfindungsgemäßen Telekommunikationssystems.

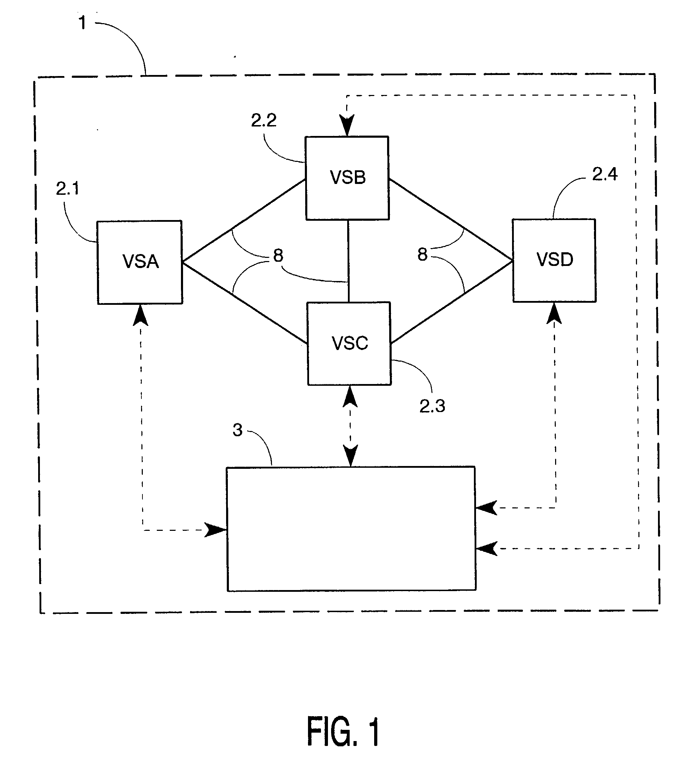

In Figur 1 ist ein Telekommunikationssystem 1 dargestellt, das 4 Vermittlungsstellen (VS) 2.1, 2.2, 2.3 und 2.4 sowie eine Steuereinheit 3 enthält. Die Vermittlungsstellen 2.1-2.4 sind über die dargestellten Leitungen 8 miteinander verbunden und bilden so ein privates Netz. Die Steuereinheit 3 ist mit allen Vermittlungsstellen 2.1-2.4 gekoppelt, so daß eine Steuerung der jeweiligen vermittlungstechnischen Funktion ermöglicht wird. An die Vermittlungsstellen 2.1 -2.4 sind beliebige Endgeräte anschließbar, sowie Übergänge in das öffentliche oder andere externe Netze möglich.

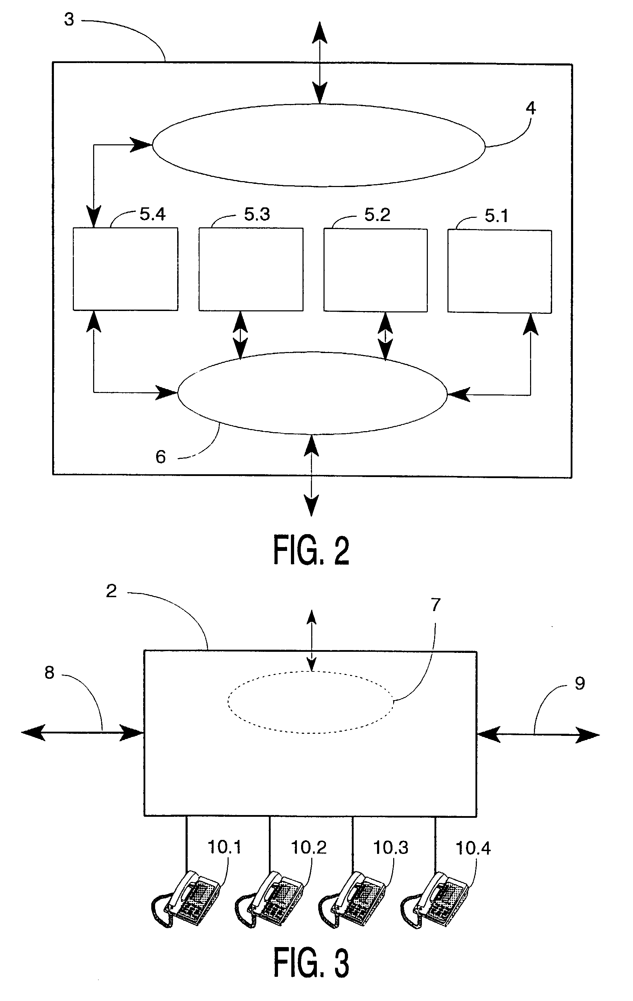

Der Aufbau der Steuereinheit 3 wird anhand des Blockdiagramms in Figur 2 näher beschrieben. Ein Mikroprozessor 6 erhält durch eine Eingabeeinheit, z.B. eine Tastatur o.ä. in Verbindung mit einem Bildschirm, die das Netz beschreibenden Parameter. Dazu gehören Informationen den Aufbau des privaten Netzes 1 betreffend und Informationen, wo und zu welchen Bedingungen Übergänge in externe Netze möglich sind. Der Mikroprozessor 6 ist mit einem Speicher 5 gekoppelt, der in 4 Bereiche unterteilt ist. Im Speicherbereich 5.1 ist die Netzarchitektur, im Bereich 5.2 die Verbindungsbäume, im Bereich 5.3 die Vermittlungsbäume und im Bereich 5.4 die Tabellen mit den Vermittlungsdaten gespeichert. Die Berechnungen werden jeweils im Mikroprozessor 6 durchgeführt, in dem die entsprechenden Algorithmen als Software implementiert sind. Eine Pfadzuteilungseinheit ist mit dem Speicher 5.4 gekoppelt, so daß die Vermittlungsdaten der angeschlossenen Vermittlungsstelle 2 übergeben werden können.

In Figur 3 ist der Aufbau einer Vermittlungsstelle 2 näher beschrieben. Dabei ist eine Schaltungsanordnung zur Vermittlung 7 mit einer Pfadzuteilungseinheit 4 gekoppelt. An die Vermittlungsstelle 2 sind die internen Leitungen 8 des privaten Netzes und Verbindungen zu externen Netzen 9 sowie Endgeräte 10.1 bis 10.4 angeschlossen. Die internen Leitungen 8 sind insbesondere unter dem LCR Gesichtspunkt als bevorzugte Leitungen anzusehen, während die externen Leitungen 9 eine geringere Priorität bei der Pfadzuteilung besitzen. Als Endgeräte können selbstverständlich neben den abgebildeten Telefonen 10.1, 10.2, 10.3 und 10.4 auch andere Telekommunikationsgeräte verwendet werden. Bei einem Verbindungswunsch zu einem Endgerät außerhalb der eigenen Vermittlungsstelle 2 stellt die Schaltungsanordnung 7 mittels der Pfadzuteilungseinheit 4 eine Verbindung zur Verfügung. Zur Auswahl der am besten geeigneten Verbindung sucht die Pfadzuteilungseinheit 4 anhand der gewählten Kennung (Telefonnummer) aus der Tabelle 5.4 die Vermittlungsdaten heraus, die der Schaltungsanordnung 7 übermittelt werden. Die Vermittlungsstelle 2 stellt damit die Verbindung zu einer nächsten Vermittlungsstelle her. Wenn die Verbindung zur nächsten Vermittlungsstelle z.B. aufgrund einer besetzten Leitung nicht wie vorgesehen hergestellt werden kann, werden mittels der Pfadzuteilungseinheit 4 die Vermittlungsdaten einer alternativen Verbindung beschafft. Auf diese Weise wird auch ein eingehender Anruf weitervermittelt, der nicht an ein an diese Vermittlungsstelle 2 angeschlossenes Endgerät gerichtet ist. Die Vermittlung erfolgt von einer Vermittlungsstelle 2 zur nächsten, so daß jeder Vermittlungsstelle 2 die entsprechenden Vermittlungsdaten 5.4 zur Verfügung stehen müssen. Jede Vermittlungsstelle 2 erkennt lediglich den Anfangs- und den Endpunkt der gewünschten Verbindung.

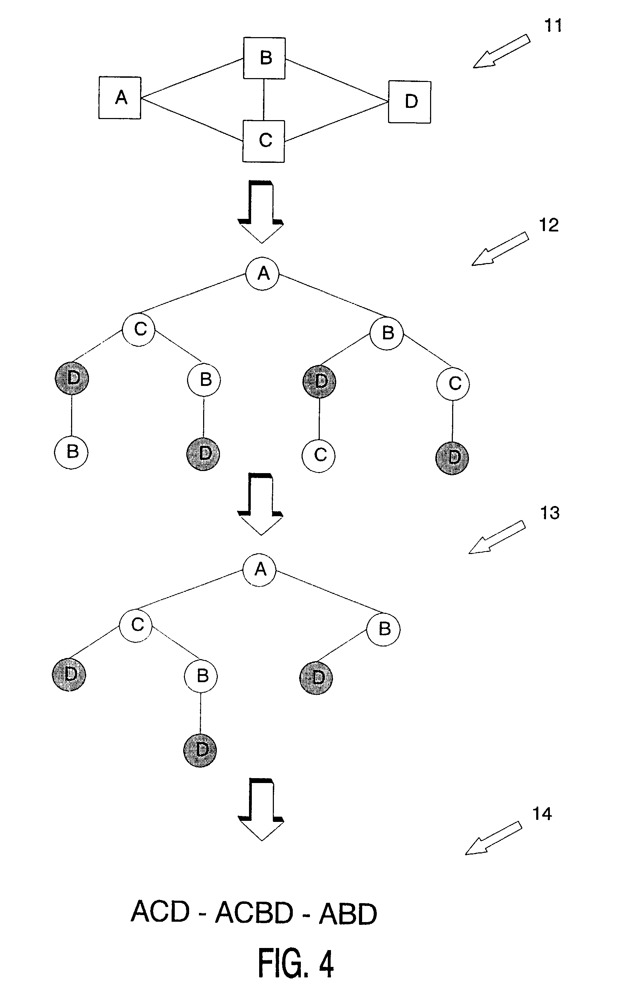

Ausgehend vom Netz 11 ist in Figur 4 die Berechnung einer Tabelle von Vermittlungsdaten 14 aus einem Verbindungsbaum 12 über einen Vermittlungsbaum 13 beschrieben. Die Vermittlungsstellen 2.1 bis 2.4 werden durch die Knoten A, B, C und D und die internen Verbindungen 8 durch die Linien dargestellt. Diese sind als Informationen über das Netz 11 im Speicherbereich 5.1 abgespeichert. Im folgenden wird nur die erfindungsgemäße Optimierung der Vermittlung innerhalb des privaten Netzes 11 erläutert, so daß Übergangsmöglichkeiten in öffentliche und/oder andere externe Netze nicht dargestellt sind. Es wird davon ausgegangen, daß zunächst prinzipiell die kostengünstigste Verbindung genutzt wird, weshalb bei mehreren Übergangsmöglichkeiten meist weitestgehend die internen Verbindungen 8 verwendet werden.

Der Mikroprozessor 6 wandelt die Knoten A-D und Linien des Netzes 11 mittels eines einfachen rekursiven Algorithmus in eine Gruppe von Verbindungsbäumen um, wobei jeder Knoten einmal den Anfangsknoten (root) eines Verbindungsbaumes 12 bildet. In Figur 4 ist der Verbindungsbaum 12 für Knoten A dargestellt. Die Verbindungsbäume werden so gebildet, daß in einem Zweig vom Anfangsknoten (root) zum jeweiligen Endknoten (leaf) jeder Knoten höchstens einmal vorkommt. Der folgende Algorithmus ermöglicht die Bildung von schleifenfreien Zweigen:

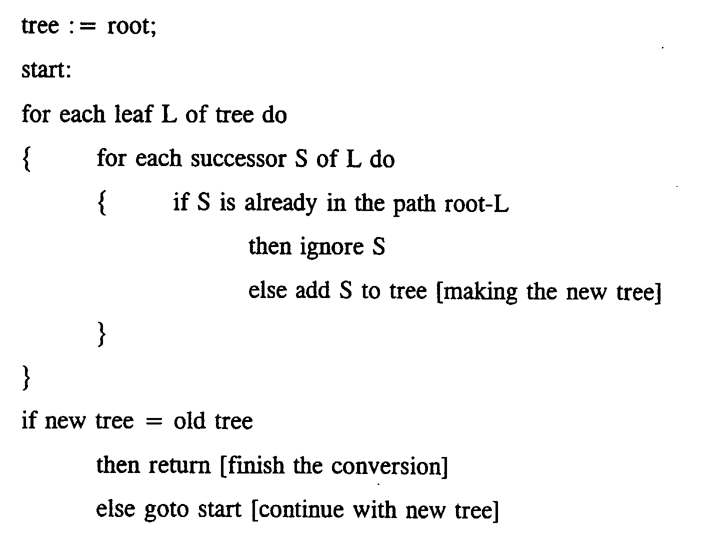

Dieser Algorithmus fügt in jedem Verbindungsbaum jedem Zweig einen weiteren Knoten als Blatt hinzu, wenn dieser Knoten im bisherigen Zweig noch nicht vorhanden ist.

Anschließend wird jeder Knoten im Verbindungsbaum 12 nacheinander untersucht. In Figur 4 ist die Darstellung mit dem Knoten D als untersuchtem Zielknoten (target node) ausgewählt. Aus dem Verbindungsbaum 12 ergeben sich 4 mögliche Verbindungen vom Anfangsknoten A zum Zielknoten D: ACD, ACBD, ABDC, ABCD. Wenn alle vier Verbindungen der Vermittlungsstelle 2 zur Verfügung gestellt würden, wäre bei Zuteilung eines alternativen Pfades aufgrund von besetzten Leitungen keine schleifenfreie Vermittlung gewährleistet. Wie o.a. wird in jeder beteiligten Vermittlungsstelle 2 eine Pfadzuteilung anhand der entsprechenden Vermittlungsdaten vorgenommen. Wenn alle Verbindungen A-D in Vermittlungsdaten umgewandelt würden, würde bei einem Anfangsknoten A und einem Endknoten D an den beteiligten Knoten gelten:
A: Vermittle nach B oder C
B: Vermittle nach D oder C (ob Verbindung ABCD)
C: Vermittle nach D oder B (ob Verbindung ACBD)

Wenn die Verbindungen B-D und C-D besetzt sind, vermittelt B aufgrund seiner Vermittlungsdaten nach C und C zurück nach B. Dadurch entsteht eine Endlosschleife, in der der Anruf verloren geht.

Daher muß die Anzahl an Verbindungen, die den Vermittlungsstellen 2 zur Verfügung gestellt wird, sinnvoll reduziert werden. Der Verbindungsbaum 12 wird um den Zweig ABCD gekürzt, wodurch ein Vermittlungsbaum 13 entsteht, der im Speicherbereich 5.3 gespeichert wird. Weiterhin wurden bei der Darstellung der Zweige die nicht beteiligten Knoten weggelassen. Der Vermittlungsbaum 13 liefert für die Verbindung A-D eine Gruppe {ACD, ACBD, ABD} 14, aus denen für die beteiligten Knoten die Vermittlungsdaten erzeugt werden. Die Berechnung des Vermittlungsbaumes 13 erfolgt durch einen Algorithmus, der im Mikroprozessor 6 implementiert ist. Dabei laufen folgende Schritte ab:
- Sortiere die Zweige des Verbindungsbaumes 12 von links nach rechts (ACD,ACBD,ABD,ABCD)
- Untersuche jede Verbindung A-D mit mehr als drei Knoten auf Paare von Knoten: Wenn die Verbindung A-B-C-D untersucht wird, lösche alle Verbindungen, die das Paar CB (BC in umgekehrter Reihenfolge) enthalten, d.h. A-C-B-D, aus dem restlichen, noch nicht untersuchten Verbindungsbaum 12.

Der so erhaltene Vermittlungsbaum 13 wird in Vermittlungsdaten für alle beteiligten Knoten umgewandelt, wodurch schleifenfreie Vermittlung im Netz 11 ermöglicht wird.

Im folgenden wird beispielhaft der Ablauf des Algorithmus für den Verbindungsbaum 12 gezeigt:
- Untersuche ACD: Keine Löschung, ACD ist Zweig des Vermittlungsbaumes
- Untersuche ACBD: Lösche ABCD wegen Paar CB in ACBD
- Untersuche ABD: Keine Löschung, ABD ist Zweig des Vermittlungsbaumes

Daher verbleibt die Gruppe von Verbindungen 14 {ACD, ACBD, ABD}.

Für das Netz 11 im Ausführungsbeispiel gilt, daß keine Verbindung mit bis zu 3 Knoten Auswirkungen auf eine andere Verbindung von A nach D haben kann, weil weder ein Paar mit Knoten A an zweiter Position (XA) noch ein Paar mit Knoten D an erster Position (DX) im Verbindungsbaum 12 auftreten, und damit gelöscht werden, kann.

Eine weitere Möglichkeit, einen Vermittlungsbaum 13 für schleifenfreie Vermittlung im Netz 11 zu berechnen, wird durch den im folgenden beschriebenen Algorithmus realisiert, der ebenfalls im Mikroprozessor 6 implementiert wird.
- Untersuche den Verbindungsbaum 12 paarweise in lexikografischer Reihenfolge, d.h., untersuche die Paare in den Zweigen von oben nach unten und jeweils von links nach rechts auf einer Stufe.
- Wenn das untersuchte Paar z.B. BC ist, lösche alle Verbindungen A-D, die das Paar CB (BC in umgekehrter Reihenfolge) enthalten.

Im folgenden wird beispielhaft der Ablauf dieses Algorithmus für den Verbindungsbaum 12 gezeigt:
- Untersuche AC: Keine Löschung, da XA nicht existiert s.u.
- Untersuche AB: Keine Löschung, da XA nicht existiert s.u.
- Untersuche CD: Keine Löschung, da DX nicht existiert s.u.
- Untersuche CB: Lösche ABCD wegen Paar CB in ACBD
- Untersuche BD (von ABD): Keine Löschung, da DX nicht existiert s.u.
- Untersuche BD (von ACBD): Keine Löschung, da DX nicht existiert s.u.

Daher verbleibt die Gruppe von Verbindungen 14 {ACD, ACBD, ABD}.

Es gilt wieder, daß die Paare AX und XD nicht untersucht werden müssen, da sie nicht in umgekehrter Reihenfolge auftreten können, d.h. weder ein Paar mit Knoten A an zweiter Position (XA) noch ein Paar mit Knoten D an erster Position (DX) existiert im Verbindungsbaum 12, und kann damit gelöscht werden.

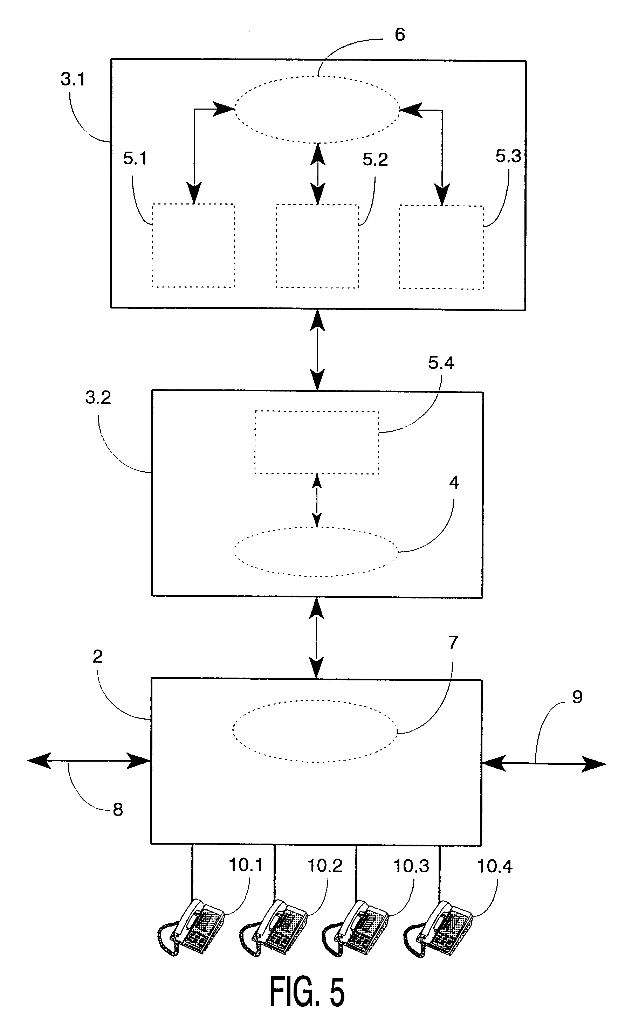

In Figur 5 ist ein Ausführungsbeispiel des erfindungsgemäßen Telekommunikations-systems 1 dargestellt, bei dem die Steuereinheit 3 derart aufgeteilt wurde, daß die Pfadzuteilungseinheit 4 und ein Speicher 5.4 mit Tabellen mit Vermittlungsdaten im Teil 3.2 ausgegliedert wurden. Diese Funktionen sind für jede Vermittlungsstelle 2 vorhanden und direkt gekoppelt oder bereits enthalten. Die Vermittlungsstelle 2 enthält die Schaltungsanordnung zur Vermittlung 7, die zum einen mit der Pfadzuteilungseinheit 4 zum anderen mit internen Leitungen 8 und externen Leitungen 9 sowie mit Endgeräten 10.1, 10.2, 10.3 und 10.3 verbunden ist. Der verbliebende Teil der Steuereinheit 3.1 enthält den Mikroprozessor 6 und die Speicherbereiche 5.1, 5.2 und 5.3, die die gleiche Funktion wie in der Steuereinheit 3 besitzen. Der Teil 3.1 muß nicht an jeder Vermittlungsstelle 2 einmal zur Verfügung stehen, sondern kann die Berechnungen für das Netz 1 zentral ausführen. Aus den im Speicherbereich 5.3 gespeicherten Vermittlungsbäumen werden vom Mikroprozessor 6 die Vermittlungsdaten für jeden Knoten berechnet. Diese Vermittlungsdaten werden beispielsweise per Datenfernübertragung (DFÜ) oder Lieferung eines Datenträgers an den Speicher 5.4 der jeweiligen Vermittlungsstelle 2 übertragen. Der Teil 3.2 ist als PC ausgeführt, wodurch eine Modifikation der Vermittlungsdaten vor Ort auch von weniger geschulten Spezialisten durchgeführt werden kann. Über eine anwenderfreundliche Bedienoberfläche werden die neuen Daten auf herkömmliche Weise geladen.

Modifikationen der Vermittlungsdaten werden bei Änderungen von Umgebungsparametern (z.B. neue Kostentabellen oder ein neu angebotenes externes Netz) zentral vom Teil 3.1 berechnet. Die erzeugten Daten können dann dezentral an jedem Knoten zeitgleich installiert werden.

## Patentansprüche

1. Telekommunikationssystem (1) mit mehreren miteinander gekoppelten Vermittlungstellen (2.1, 2.2, 2.3, 2.4) und wenigstens einer gekoppelten Steuereinheit (3),
dadurch gekennzeichnet,
daß die Steuereinheit (3)
- zur Bildung wenigstens eines Verbindungsbaumes (12), der von einer Vermittlungsstelle (2.1-2.4) ausgehende schleifenfreie Verbindungen zu anderen Vermittlungsstellen (2.1-2.4) des Telekommunikationssystems (1) als Zweige enthält, und
- zur Umwandlung des Verbindungsbaumes (12) in einen Vermittlungsbaum (13) durch Ermittlung von Paaren von Vermittlungsstellen (2.1-2.4) in den Zweigen und durch Löschung wenigstens eines, das jeweilige Paar in umgekehrter Reihenfolge enthaltenden, Zweiges,
vorgesehen ist.

2. Telekommunikationssystem (1) nach Anspruch 1,
dadurch gekennzeichnet,
daß die Steuereinheit (3) in der Weise auf dem Verbindungsbaum (12) arbeitet, daß die Zweige des Verbindungsbaumes (12) nacheinander bearbeitet und alle folgenden Zweige, die das gerade bearbeitete Paar in umgekehrter Reihenfolge enthalten, gelöscht werden.

3. Telekommunikationssystem (1) nach Anspruch 1,
dadurch gekennzeichnet,
daß die Steuereinheit (3) der Weise auf dem Verbindungsbaum (12) arbeitet, daß die Zweige in lexikographischer Reihenfolge bearbeitet und alle folgenden Zweige, die das gerade bearbeitete Paar in umgekehrter Reihenfolge enthalten, gelöscht werden.

4. Telekommunikationssystem (1) nach Anspruch 1,
dadurch gekennzeichnet,
daß die Steuereinheit (3) aus Vermittlungsbäumen (13) Tabellen mit Vermittlungsdaten für Vermittlungsstellen (2.1-2.4) bildet und in einem der Steuereinheit (3) zugeordneten Speicher (5.4) speichert.

5. Telekommunikationssystem (1) nach Anspruch 4,
dadurch gekennzeichnet,
daß die Vermittlungsstellen (2.1-2.4) einen Vermittlungsdatenspeicher (5.4) und eine Pfadzuteilungseinheit (4) enthalten.

6. Telekommunikationssystem (1) nach Anspruch 5,
dadurch gekennzeichnet,
daß wenigstens eine Vermittlungsstelle (2) einen PC (3.2) enthält, der den jeweiligen Vermittlungsdatenspeicher (5.4) und die Pfadzuteilungseinheit (4) enthält.

7. Telekommunikationssystem (1) nach Anspruch 5 oder 6,
dadurch gekennzeichnet,
daß die Vermittlungsdaten den zugeordneten Vermittlungsstellen (2.1-2.4) mittels Datenfernübertragung zugeführt werden.

8. Telekommunikationssystem nach Anspruch 1,
dadurch gekennzeichnet,
daß eine Vermittlungsstelle (2) jeweils eine Steuereinheit (3) enthält, die die der Vermittlungsstelle (2) zugeordneten Vermittlungsbäume (13) bildet.

9. Steuereinheit (3) für ein Telekommunikationssystem (1) mit mehreren miteinander gekoppelten Vermittlungstellen (2.1-2.4),
dadurch gekennzeichnet,
daß die Steuereinheit (3)
- zur Bildung wenigstens eines Verbindungsbaumes (12), der von einer Vermittlungsstelle (2.1-2.4) ausgehende schleifenfreie Verbindungen zu anderen Vermittlungsstellen (2.1-2.4) des Telekommunikationssystems (1) als Zweige enthält, und
- zur Umwandlung des Verbindungsbaumes (12) in einen Vermittlungsbaum (13) durch Ermittelung von Paaren von Vermittlungsstellen (2.1-2.4) in den Zweigen und durch Löschung wenigstens eines, das jeweilige Paar in umgekehrter Reihenfolge enthaltenden, Zweiges,
vorgesehen ist.

10. Vermittlungsstelle (2.1-2.4) für ein Telekommunikationssystem (1) mit mehreren miteinander gekoppelten Vermittlungstellen (2.1-2.4) und wenigstens einer Steuereinheit (3),
dadurch gekennzeichnet,
daß die Steuereinheit (3)
- zur Bildung wenigstens eines Verbindungsbaumes (12), der von einer Vermittlungsstelle (2.1-2.4) ausgehende schleifenfreie Verbindungen zu anderen Vermittlungsstellen (2.1-2.4) des Telekommunikationssystems (1) als Zweige enthält, und
- zur Umwandlung des Verbindungsbaumes (12) in einen Vermittlungsbaum (13) durch Ermittelung von Paaren von Vermittlungsstellen (2.1-2.4) in den Zweigen und durch Löschung wenigstens eines, das jeweilige Paar in umgekehrter Reihenfolge enthaltenden, Zweiges,
vorgesehen ist.
